(19) **Europäisches Patentamt**

**European Patent Office**

**Office européen des brevets**

(11) Veröffentlichungsnummer: **0 260 399 B1**

(12) **EUROPÄISCHE PATENTSCHRIFT**

(45) Veröffentlichungstag der Patentschrift: **24.04.91**

(21) Anmeldenummer: **87110111.9**

(22) Anmeldetag: **14.07.87**

(51) Int. Cl.⁵: **B60K 23/02**, F16D 23/12

(54) **Einrichtung zum Betätigen einer Kupplung.**

(30) Priorität: **13.09.86 DE 3631244**

(43) Veröffentlichungstag der Anmeldung:
**23.03.88 Patentblatt 88/12**

(45) Bekanntmachung des Hinweises auf die
Patenterteilung:
**24.04.91 Patentblatt 91/17**

(84) Benannte Vertragsstaaten:
**DE FR GB IT SE**

(56) Entgegenhaltungen:
**DE-A- 3 327 057**
**FR-A- 2 560 316**
**FR-A- 2 564 999**
**GB-A- 2 117 076**
**US-A- 3 262 532**

(73) Patentinhaber: **ROBERT BOSCH GMBH**
**Postfach 50**
**W-7000 Stuttgart 1(DE)**

(72) Erfinder: **Ahner, Peter, Dipl.-Ing.**
**Wiesenstrasse 25**
**W-7140 Ludwigsburg(DE)**
Erfinder: **Härer, Helmut, Dr.-Ing.**
**Obere Weinbergenstrasse 22**
**W-7148 Remseck 1(DE)**
Erfinder: **Schieber, Dieter, Dipl.-Ing. FH**
**Lerchenstrasse 28**
**W-7101 Untereisesheim(DE)**
Erfinder: **Schustek, Siegfried, Dr.-Ing.**
**Adlerstrasse 21**
**W-7997 Immenstaad(DE)**

## Beschreibung

### Stand der Technik

Die Erfindung geht aus von einer Einrichtung zum Betätigen einer Kupplung, insbesondere für ein Kraftfahrzeug. Eine derartige, aus der US-A 3 262 532 bekannte Einrichtung benutzt einen mechanischen Krafteingang in Form eines Kupplungshebels. Dieser wirkt über ein Koppelgetriebe auf eine Spiralfeder und spannt diese beim Betätigen vor. Hierdurch wird ein Kraftspeicher gebildet, der beim Betätigen der Kupplung eine Hilfskraft abgibt. Diese bekannte Einrichtung hat jedoch den Nachteil, daß sie nur einen Krafteingang aufweist, so daß die Betätigungskräfte der Kupplung immer noch sehr groß sind.

### Vorteile der Erfindung

Die erfindungsgemäße Einrichtung zum Betätigen einer Kupplung hat demgegenüber den Vorteil, daß sie verhältnismäßig große kupplungsbetätigungskräfte bereitstellt, dabei doch sehr Kompakt baut und verhältnismäßig einfach ist und sehr wirtschaftlich betrieben werden kann.

Besondere Vorteile der Erfindung ergeben sich aus den Unteransprüchen.

### Zeichnung

Zwei Ausführungsbeispiele der Erfindung sind in der Zeichnung dargestellt und in der nachfolgenden Beschreibung näher erläutert. Die Zeichnung zeigt in Figur 1 einen Längsschnitt durch eine Einrichtung zum Betätigen einer Kupplung, in Figur 2 einen Querschnitt durch diese Einrichtung, in Figur 3 ein Diagramm, in Figur 4 bzw. 5 ein zweites bzw. drittes, aber nur geringfügig abgewandeltes Ausführungsbeispiel.

### Beschreibung der Erfindung

An ein Gehäuse 10 einer Kupplungsbetätigungseinrichtung ist ein kleiner Elektromotor 11 angeflanscht, welcher beispielsweise von der Batterie des Kraftfahrzeugs versorgt wird. Auf der in das Gehäuse 10 eindringenden Antriebswelle 12 des Elektromotors ist ein Ritzel 13 angeordnet, welches mit einem Schneckenrad 14 kämmt, das auf einer im Gehäuse gelagerten Welle 15 angeordnet ist; auf derselben sitzt ebenfalls unverdrehbar eine Kurvenscheibe 16. An dieser ist ein Seilzug 17 befestigt, der durch eine am Gehäuse 10 befestigte Führung 18 nach außen ragt und zum Betätigen der Einrichtung dient. Der Seilzug 17 kann beispielsweise am Kupplungsausrückhebel oder an einem anderen Teil der Kupplung selbst befestigt sein. Der Seilzug bildet den mechanischen Krafteingang der Einrichtung.

An der Kurvenscheibe 16 ist ein Bolzen 19 befestigt, auf dem ein Koppelglied 20 gelagert ist. Die zweite Lagerstelle des Koppelglieds 20 ist ein Bolzen 21, der an einem scheibenförmigen Zwischenglied 22 befestigt ist. Das Zwischenglied 22 ist ebenfalls um eine mittige Aches 23 drehbar gelagert und hat einen Fortsatz 24, welcher sich entgegengesetzt zum Bolzen 21 erstreckt und an den sich außen eine Spiralfeder 25 anlegt. Diese ist mit ihrem festen Ende auf einer Welle 26 befestigt, d. h. sie greift mit einem Endteil 23A in einen Schlitz 24' der Welle ein und ist um die Welle 26 herum spiralig aufgewickelt. Die Spiralfeder 25 bildet den Kraftspeicher für die Kupplungs-Betätigungseinrichtung.

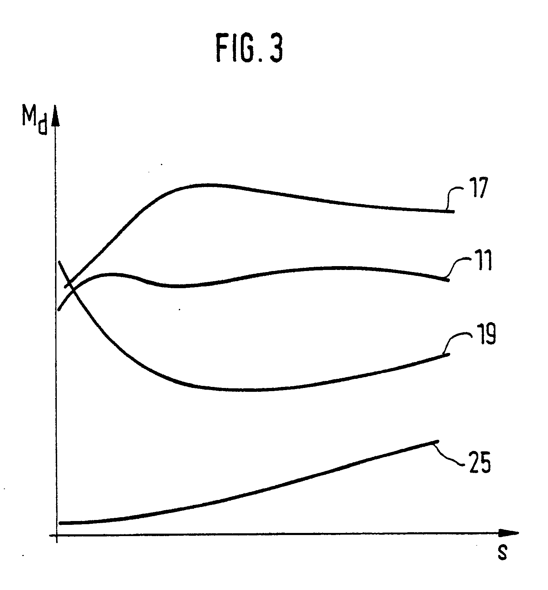

Am Zwischenglied 22 sind zwei Nocken 27, 28 angeordnet, welche mit elektrischen Schaltern 29, 30 zusammenwirken, die fest im Gehäuse 10 angeordnet sind. Über die beiden Schalter 29, 30 wird beim Verdrehen des Zwischenglieds 22 durch Betätigen der Nocken 27, 28 der Elektromotor 11 ein- und ausgeschaltet. Die Nocken 27, 28 sind so am Zwischenglied 22 angeordnet, daß die Schalter 29, 30 jeweils nach einem Verdrehwinkel von z. B. 50 Grad betätigt werden; d. h. das Zwischenglied 22 macht nie eine volle Umdrehung, was auch für die Kurvenscheibe 16 gilt. Diese hat zwei Flanken 32, 33, welche mit im Gehäuse 10 angeordneten Anschlägen 34, 35 zusammenwirken und damit eine mechanische Wegbegrenzung bilden. Auf der Antriebswelle 12 ist eine Rutschkupplung 36 angeordnet, die ein Blockieren des Schneckengetriebes verhindert. Im Diagramm nach Figur 3 sind auf der Abszisse der Kupplungsweg s aufgetragen, auf der Ordinate beispielhaft die Momentenverläufe vom Kupplungsseil 17, vom Elektromotor 11, von der Spiralfeder 25 und vom auf die Welle 15 bezogenen Spiralfedermoment.

Der Elektromotor 11 und das Kupplungsseil 17 wirken beide auf den Bolzen 21 (Lagerstelle des Koppelglieds). Die Spiralfeder 25 kann durch das Kupplungsseil 17, mit Unterstützung durch den Elektromotor 11, gespannt werden. Vom Elektromotor 11 wie auch vom Kupplungsseil 17 wird die Kurvenscheibe 16 verdreht, und über das Koppelglied 20 sowie das Zwischenglied 22 wird die Spiralfeder 25 gespannt und bildet somit einen Kraftspeicher beim und für das Betätigen der Kupplung, indem sie dann die gespeicherte Energie zur Verfügung stellt. Die Einrichtung führt zu den im Diagramm nach Figur 3 qualitativ dargestellten Momentenverläufen, die bezogen auf die Welle 15 dargestellt sind. Durch eine entsprechende Anordnung des Koppelglieds 20 wird das weitgehend linearverlaufende Spiralfedermoment 25 in gewünschter Weise beeinflußt. Auf die Welle 15, über den Bolzen 19 einwirkend, bezogen ergibt sich damit ein Momentenverlauf 19, der weitgehend dem für die Kupplungsbetätigung erforderlichen, über das Kupplungsseil 17 und die Kurvenscheibe 16 einwirkenden Moment 17 entspricht. Dadurch wird eine Momentenkompensation erreicht, und der Elektromotor 11 hat nur noch das verbleibende Differenzmoment aufzubringen. Die Abschaltung und Drehrichtungsumschaltung des Elektromotors erfolgt über die Schalter 29, 30 und nachgeschaltete Relais.

Man erreicht die weitgehende Momentenkompensation des vom Elektromotor aufzubringenden Moments durch Beeinflussung desselben über einen veränderlichen Hebelarm (Kurvenscheibe 16) und eine gleichzeitige Anpassung des von der Spiralfeder 25 aufgebrachten Kompensationsmoments an das einwirkende Moment 17 über das Gelenkviereck (Gegenpunkte A-B-C-D). Beim Öffnen der Kupplung entspannt sich die Spiralfeder zum Teil, die freiwerdende Energie unterstützt den Elektromotor nachhaltig. Die in der geöffneten Kupplung gespeicherte Energie wird beim Schließvorgang zum erneuten Aufziehen der Spiralfeder verwendet.

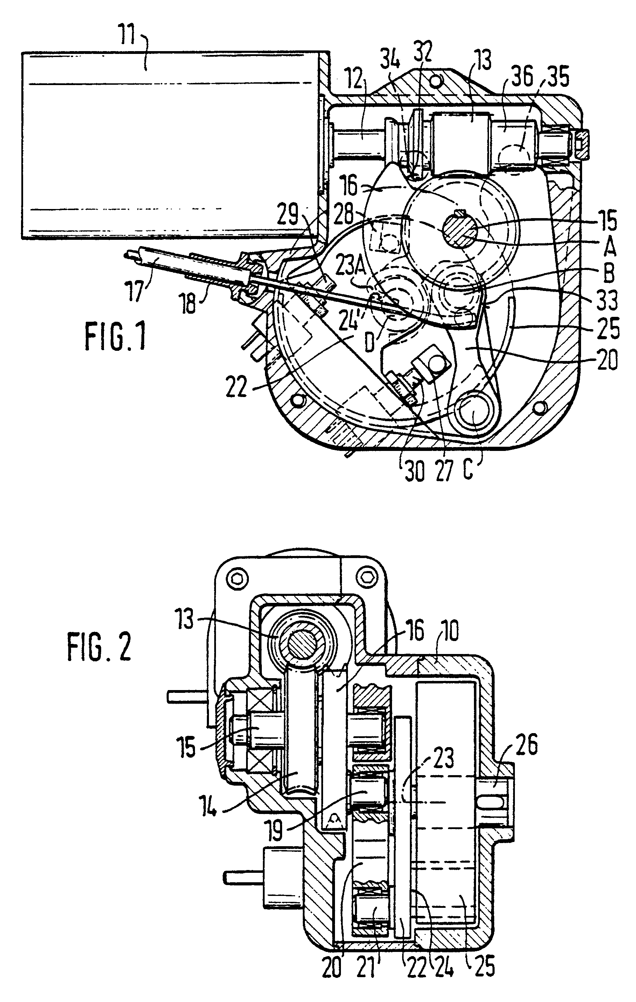

Über die Ausführung der Spiralfeder und das Gelenkviereck bzw. den veränderlichen Hebelarm des Auflagepunktes des Kupplungsseils können die Momentenverläufe der Spiralfeder und der Kupplung - bezogen auf die Welle 15 - so gezielt beeinflußt werden, daß der Elektromotor nur noch ein kleines, gleichgerichtetes und weitgehend gleichmäßiges Differenzmoment aufzubringen hat. In der Kupplungsumkehrlage (Kupplung geschlossen) wird das Kupplungsseil 17 von der Spiralfeder 25 dadurch entlastet, daß diese über einen Totpunkt (Linienzug A, B, C in Figur 1) bewegt wird, wodurch das resultierende Federmoment in Kupplungsschließrichtung wirkt.

Eine weitere Sicherung gegen ein unvorhergesehenes Betätigen ist dadurch gegeben, daß das Schneckengetriebe 13, 14 selbsthemmend ausgebildet ist, wodurch nur ein motorseitiger Antrieb möglich ist. Ein Verspannen des Schneckengetriebes, beispielsweise durch das ungebremste Anlaufen in den mechanischen Endanschlag, wird durch die Rutschkupplung 36 verhindert.

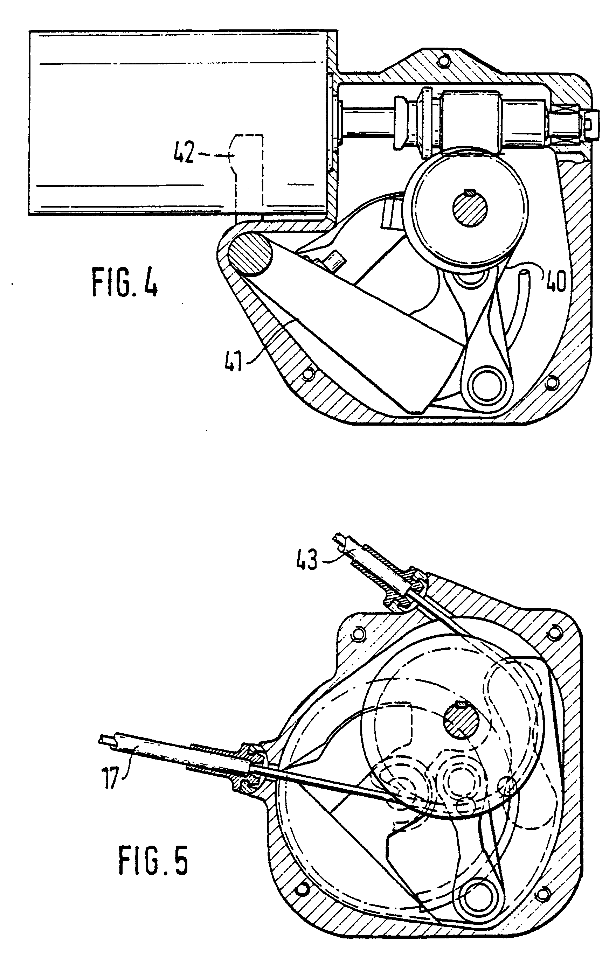

Beim Ausführungsbeispiel nach Figur 4 ist das Kupplungsseil durch ein Stahlband 40 ersetzt, das auf ein Scheibensegment 41 einwirkt, an dessen Drehpunkt der Ausrückhebel 42 befestigt ist. Auf diese Weise kann die Kupplungsbetätigung auch direkt an die Kupplung angebaut werden. Die Hilfskrafteinrichtung kann auch ohne Elektromotor als Unterstützungselement für eine fußbetätigte Kupplung eingesetzt werden (Figur 5). Statt der Verwendung eines Elektromotors samt Schneckengetriebe, Endschalter und Anschläge wird das Kupplungsseil an einer, ebenfalls an der Welle 15 aufgesteckten Kurvenscheibe eingehängt und zum Kupplungspedal weitergeführt (43). Die einzelnen Momentenverläufe sind dann so einzustellen, daß auf das Seil, bei beiden Betätigungsrichtungen, eine definierte Zugkraft wirkt.

Die einzelnen Elemente der Hilfskrafteinrichtung sind so angeordnet, daß bei einer kompakten Bauweise ein Baukastensystem verwirklicht werden kann. Die bestimmenden Elemente (Elektromotor, Kurvenscheibe, Schneckengetriebe, Spiralfeder, Koppelglied, Federträgerscheibe) können dann jeweils ausgetauscht werden. Dadurch ist auf einfache Weise eine Anpassung an einen geforderten Momentenverlauf möglich. Durch die Anbindung der Einrichtung an die Kupplung über ein Kupplungsseil ist eine motorunabhängige Anbringung im Motorraum möglich.

**Ansprüche**

1. Einrichtung zum Betätigen einer Kupplung, insbesondere für ein Kraftfahrzeug, mit Hilfskraftunterstützung, die mit einem als Spiralfeder (25) ausgebildeten Kraftspeicher über ein Koppelgetriebe (16, 20, 22) in Wirkverbindung steht und in einem Gehäuse untergebracht ist, dadurch gekennzeichnet, daß die Hilfskraft durch zwei Krafteingänge (11, 17) gebildet ist, daß die Spiralfeder (25) auf einer Welle (26) angeordnet ist und über ein Zwischenglied (22) mit dem als Kurbeltrieb ausgebildeten Koppelgetriebe verbunden ist, an dem auf einer im Gehäuse (10) gelagerten Welle (15) eine Kurvenscheibe (16) befestigt, auf die einerseits ein Schneckentrieb (12, 14) einwirkt, andererseits der als Seilzug (17) ausgebildete mechanische Krafteingang und daß an der Kurvenscheibe zwei flankenartige Anschläge (32, 33) ausgebildet sind, die mit zwei Anschlägen (34, 35) im Gehäuse zusammenwirken.

2. Einrichtung nach Anspruch 1, dadurch gekennzeichnet, daß der eine Krafteingang ein Elektromotor (11) ist, der andere Krafteingang ein mechanischer.

3. Einrichtung nach Anspruch 1, dadurch gekennzeichnet, daß beide Krafteingänge mechanischer Art sind, wobei der eine Krafteingang vom Kupplungspedal kommt, der andere vom Kupplungsausrückhebel.

4. Einrichtung nach einem der Ansprüche 1 bis 3, dadurch gekennzeichnet, daß an dem mit der Welle (26) verbundenen Zwischenglied (22) zwei mit gehäusefest angeordneten Schaltern (29, 30) in Wirkverbindung stehende Nocken (27, 28) zum Ein- und Ausschalten des Elektromotors (11) befestigt sind.

5. Einrichtung nach einem der Ansprüche 1 bis 4, dadurch gekennzeichnet, daß der Kurbeltrieb ein Koppelglied (20) aufweist, das einerseits mit der Kurvenscheibe (16) verbunden ist, und zwar an einer Lagerstelle (Bolzen 19), andererseits mit dem Zwischenglied (22).

6. Einrichtung nach einem der Ansprüche 1 bis 5, dadurch gekennzeichnet, daß der Elektromotor (11) derart dimensioniert ist, daß er beim Öffnen der Kupplung die Momentendifferenz zwischen der am mechanischen Krafteingang (17) wirkenden Kraft gegenüber der am Kurbeltrieb wirkenden Federkraft aufbringt, bzw. beim Schließen der Kupplung die Differenzkraft zwischen der zum Spannen der Spiralfeder notwendigen Kraft und der durch das Schließen der Kupplung zur Verfügung stehenden Kraft.

7. Einrichtung nach einem der Ansprüche 1 bis 6, dadurch gekennzeichnet, daß das Kupplungsseil (17) in der Kupplungsumkehrlage (Kupplung geschlossen) von der Spiralfeder (25) dadurch entlastet wird, daß diese über einen Totpunkt (Linienzug A, B, C) bewegt wird.

## Claims

1. Clutch actuating system, in particular for a motor vehicle, with auxiliary power assistance, which system is operatively connected by a linkage (16, 20, 22) to an energy storage means in the form of a spiral spring (25) and is accommodated in a casing, characterised in that the auxiliary force is formed by two force inputs (11, 17), that the spiral spring (25) is disposed on a shaft (26) and is connected via an intermediate link (22) to the linkage which is in the form of a crank mechanism and in which there is fastened on a shaft (15) mounted in the casing (10) a cam disc (16) acted on by a worm drive (12, 14) on the one hand and the mechanical force input in the form of a cable (17) on the other hand, and that two flank-like stops (32, 33) are formed on the cam disc and cooperate with two stops (34, 35) in the casing.

2. System according to Claim 1, characterised in that one force input is an electric motor (11) and the other force input is a mechanical force input.

3. System according to Claim 1, characterised in that both force inputs are of a mechanical type, one force input coming from the clutch pedal and the other from the clutch release lever.

4. System according to one of Claims 1 to 3, characterised in that two cams (27, 28) operatively connected to switches (29, 30) fixed to the casing are fastened on the intermediate link (22) connected to the shaft (26), for the purpose of switching the electric motor (11) on and off.

5. System according to one of Claims 1 to 4, characterised in that the crank mechanism has a link (20) which is connected on the one hand to the cam disc (16) at a mounting point (pin 19), and on the other hand to the intermediate link (22).

6. System according to one of Claims 1 to 5, characterised in that the electric motor (11) is of such dimensions that on the opening of the clutch it supplies the moment difference between the force acting at the mechanical force input (17) and the spring force acting on the crank mechanism, and on the closing of the clutch it supplies the difference in force between that required for loading the spiral spring and the force available through the closing of the clutch.

7. System according to one of Claims 1 to 6, characterised in that in the clutch reversal position (clutch closed) the clutch cable (17) is relieved of load by the spiral spring (25) through the movement of the latter beyond a dead centre (line A, B, C).

## Revendications

1. Dispositif d'actionnement d'un embrayage, notamment pour un véhicule automobile, avec l'assistance d'une force auxiliaire, qui est en liaison active par l'intermédiaire d'un engrenage d'accouplement (16, 20, 22), avec un accumulateur d'énergie constitué par un ressort spiralé (25), et est logé dans un carter, caractérisé en ce que la face auxiliaire est constituée par deux entrées de force (11, 17), en ce que le ressort spiralé (25) est disposé sur un arbre (26) et est relié par un élément intermédiaire (22) à l'engrenage de couplage constitué par une commande à manivelle, sur lequel est fixé un disque à came (16) sur un arbre (15) monté dans le carter (16), sur lequel agit, d'une part, un engrenage à vis sans fin (12, 14) et, d'autre part, l'entrée de force mécanique constituée par un câble de tirage et en ce que sont constituées, sur le disque à came, deux butées (32, 33) sous forme de flancs, qui sont associées à deux butées (34, 35).

2. Dispositif selon la revendication 1, caractérisé en ce qu'une des entrées de force est un moteur électrique et l'autre entrée de force est mécanique.

3. Dispositif selon la revendication 1, caractérisé en ce que les deux entrées de force sont de type mécanique, l'une des entrées de force venant de la pédale d'embrayage et l'autre du levier d'actionnement d'embrayage.

4. Dispositif selon l'une des revendications 1 à 3, caractérisé en ce que sont fixées sur l'élément intermédiaire (22) relié à l'arbre (26) deux cames (27, 28) se trouvant en liaison active avec deux commutateurs (29, 30) montés fixes sur le carter, pour le branchement et le débranchement du moteur électrique (11).

5. Dispositif selon l'une des revendications 1 à 4, caractérisé en ce que la commande à manivelle présente un élément de couplage (20), qui est relié, d'une part, au disque à came (16), soit par un point d'appui (broche 19) et, d'autre part, à l'élément intermédiaire (22).

6. Dispositif selon l'une des revendications 1 à 5, caractérisé en ce que le moteur électrique (11) est dimensionné de telle sorte que, lors de l'ouverture de l'embrayage, il fournit la différence de moments entre la force agissant à l'entrée de force (17) mécanique et la force du ressort agissant sur la commande à manivelle et, lors de la fermeture de l'embrayage, il fournit la force différentielle entre la force nécessaire pour la tension du ressort spiralé et la force rendue disponible par la fermeture de l'embrayage.

7. Dispositif selon l'une des revendications 1 à 6, caractérisé en ce que le câble d'accouplement (17) est, en position inversée de l'embrayage (embrayage fermé) déchargé par le ressort spiralé (25), du fait que celui-ci passe par un point mort (contour polygonal A, B, C).

FIG.1

FIG. 2

# FIG. 3

FIG. 4

FIG. 5